# EUROPÄISCHE PATENTSCHRIFT

(11) **EP 0 842 074 B1**
(45) Veröffentlichungstag und Bekanntmachung des Hinweises auf die Patenterteilung: **24.05.2000**
(21) Anmeldenummer: 96928386.0
(22) Anmeldetag: 27.07.1996
(51) Int. Cl.: B60T 13/68, B60T 8/36

(54) **ELEKTROMAGNETVENTIL, INSBESONDERE FÜR HYDRAULISCHE KRAFTFAHRZEUGBREMSANLAGEN MIT RADSCHLUPFREGELUNG**
ELECTROMAGNETIC VALVE, IN PARTICULAR FOR HYDRAULIC MOTOR VEHICLE BRAKING SYSTEMS WITH WHEEL SLIP REGULATION
SOUPAPE ELECTROMAGNETIQUE, NOTAMMENT POUR SYSTEMES HYDRAULIQUES DE FREINAGE DE VEHICULES A MOTEUR A REGULATION DU GLISSEMENT DES ROUES

(30) Priorität: 12.08.1995 DE 19529724
(43) Veröffentlichungstag der Anmeldung: 20.05.1998
(73) Patentinhaber: Continental Teves AG & Co. oHG, 60488 Frankfurt (DE)
(72) Erfinder: VOLZ, Peter, D-64291 Darmstadt (DE)
(86) Internationale Anmeldenummer: EP9603320
(87) Internationale Veröffentlichungsnummer: WO9707002

(56) Entgegenhaltungen:
- EP-A- 0 334 029
- EP-A- 0 423 755
- WO-A-92/18362
- DE-A- 4 030 571
- DE-A- 4 112 136

## Beschreibung

Die Erfindung betrifft ein Elektromagnetventil, insbesondere für hydraulische Kraftfahrzeugbremsanlagen mit Radschlupfregelung nach dem Oberbegriff des Patentanspruchs 1.

Aus der DE 4030571A1 geht bereits ein Elektromagnetventil der eingangs genannten Art hervor, das mit einem Ventilgehäuse versehen ist, in das eine Hülse eingesetzt ist, die einen Magnetkern aufnimmt, wobei in Nähe des Magnetkerns ein Magnetanker mit einem Ventilschließglied angeordnet ist, das in seiner elektromagnetisch nicht erregten Grundstellung unter Wirkung einer Druckfeder einen Ventildurchgang zwischen einem ersten und einem weiteren Druckmittelkanal im Ventilgehäuse verschließt. Druckunterschiede, die sich in der Ventilschließstellung unterhalb und oberhalb in den Druckmittelkanälen einstellen, können die Schaltgeschwindigkeit des Ventils beeinträchtigen, wobei große Temperaturunterschiede die Viskosität der Flüssigkeit gleichfalls beeinträchtigen und auf die Funktion des Ventils Einfluß nehmen.

Daher ist es die Aufgabe der Erfindung, ein Elektromagnetventil der eingangs genannten Art dahingehend zu verbessern, daß Differenzdrücke und Temperatureinflüsse während der Schalttätigkeit des Ventils die Funktionsfähigkeit nicht beeinträchtigen, so daß möglichst gleichbleibende und möglichst hohe Schaltgeschwindigkeiten des Ventils erzielt werden können.

Diese Aufgabe wird erfindungsgemäß für ein Elektromagnetventil der eingangs genannten Art mit den kennzeichnenden Merkmalen des Patentanspruchs 1 gelöst.

Weitere Merkmale, Vorteile und zweckmäßige Ausgestaltungsvarianten der Erfindung gehen aus den Unteransprüchen hervor und werden im nachfolgenden anhand einer Zeichnung näher erläutert.

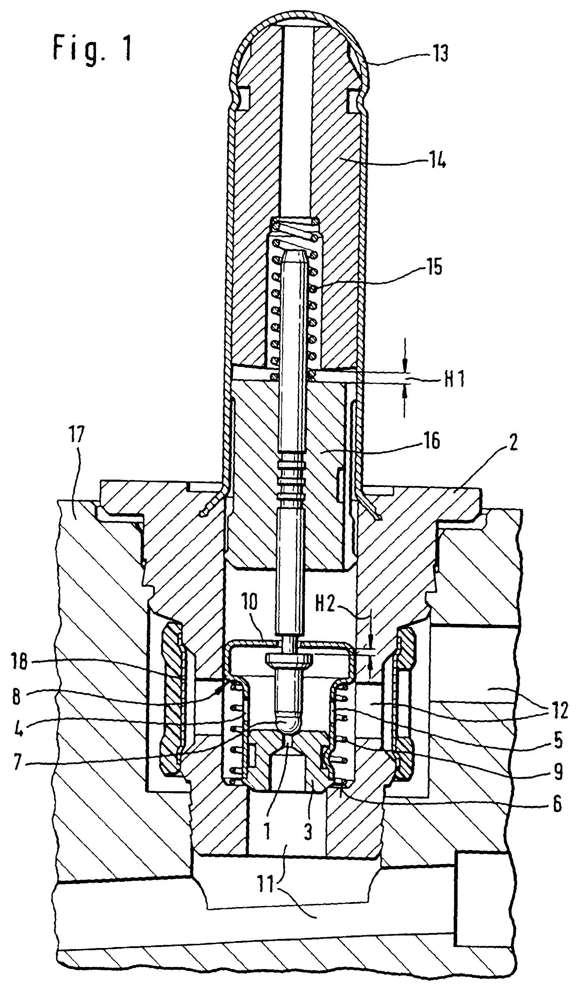

Es zeigt die Fig. 1 ein Elektromagnetventil, das vorzugsweise für hydraulische Kraftfahrzeugbremsanlagen mit Radschlupfregelung verwendet wird. Das Elektromagnetventil weist ein Ventilgehäuse 2 auf, in das eine Hülse 13 eingesetzt ist, die einen Magnetkern 14 hält, wobei in der Hülse 13 abschnittsweise gleichzeitig ein mit dem Magnetkern 14 korrespondierender Magnetanker 16 radial geführt ist. An der vom Magnetkern 14 abgewandten Stirnseite des Magnetankers 16 befindet sich an einem stößelförmigen Fortsatz ein Ventilschließglied 7, das unter Wirkung einer zwischen dem Magnetanker 16 und dem Magnetkern 14 eingespannten Feder 15 gegen einen Ventilkörper 3 gepreßt ist, so daß ein im Ventilkörper 3 koaxial verlaufender Ventildurchgang 1 durch das Ventilschließglied 7 verschlossen ist. Der Ventilkörper 3 liegt unter der am Magnetanker 16 wirksamen Feder 15 an einer Bohrungsstufe 6 im Ventilgehäuse 2 an, so daß auch gleichfalls zwischen dem Ventilkörper 3 und dem Ventilgehäuse 2 eine druckmittelundurchlässige Kontaktierung besteht. Das in der Fig. 1 abgebildete Elektromagnetventil befindet sich in elektromagnetisch nicht erregter Grundstellung, in der somit infolge der druckmittelsperrenden Wirkung des Ventilschließgliedes 7 am Ventilkörper 3 als auch der druckmittelsperrenden Wirkung des Ventilkörpers 3 gegenüber dem Ventilgehäuse 2 eine hydraulische Trennung zwischen einem abbildungsgemäß unterhalb am Ventil einmündenden Druckmittelkanal 11 und einem oberhalb des Ventilschließgliedes 7 radial einmündenden weiteren Druckmittelkanal 12 vorliegt. Der erste Druckmittelkanal 11 führt vorzugsweise zu einem Sauganschluß einer Pumpe, während der weitere Druckmittelkanal 12 mit einer Druckmittelquelle in Verbindung steht, die im Hinblick auf die Anwendung des Elektromagnetventils für eine hydraulische Kraftfahrzeugbremsanlage durch einen hydraulischen Bremsdruckgeber gebildet ist. Ein im wesentlichen hülsenförmiger Mitnehmer 8, der vorzugsweise mittels einer Einscherung am Ventilkörper 3 befestigt ist, steht unter der Wirkung einer Druckfeder 9, die sich an der Bohrungsstufe 6 abstützt. Die Federkraft der Druckfeder 9 ist jedoch so bemessen, daß mit der vorliegenden Kraft der Feder 15 das Elektromagnetventil in der Grundstellung geschlossen bleibt. Der Mitnehmer 8 ist mit Druckmitteldurchgangsöffnungen 4,5 versehen. Der stößelförmige Fortsatz zwischen Magnetanker 16 und Ventilschließglied 7 weist eine Aussparung auf, in der der aus einem vorzugsweise Dünnblechteil gefertigte Mitnehmer 8 mit einem Bund 10 spielbehaftet eingreift. Das in Hubrichtung des Magnetankers 16 zwischen dem Bund 10 und dem Ventilschließglied 7 vorgesehene Spiel H2 ist in jedem Falle kleiner zu wählen als das durch den Magnetankerluftspalt zwischen Magnetkern 14 und Magnetanker 16 erforderliche Spiel H1. Damit ist sichergestellt, daß bei elektromagnetischer Erregung des Magnetankers 16 nach Freigabe des Ventildurchganges 1 durch das Ventilschließglied 7, der Mitnehmer 8 durch den Formschluß zwischen stößelförmigem Fortsatz und Bund 10 einen Zwangshub vollzieht, der auch zur hydraulischen Freigabe des Ventilsitzes zwischen der Bohrungsstufe 6 und dem Ventilkörper 3 führt. Das vorgestellte Elektromagnetventil ist in Patronenbauweise ausgeführt, womit das Ventilgehäuse 2 als hülsenförmiges, abgestuftes Drehteil automatengerecht aus Stahl gefertigt werden kann und mittels einer selbsteinscherenden Verbindung zwischen dem Ventilgehäuse 2 und dem aus einer Leichtmetallegierung bestehenden Ventilaufnahmekörper 17 druckmitteldicht positioniert ist. Zum Schutz vor Schmutzpartikeln im Ventil ist am Umfang des Ventilgehäuses 2 ein Ringfilterelement 18 angeordnet, so daß eventuell im weiteren Druckmittelkanal 12 gelegene Schmutzpartikel nicht in den ersten Druckmittelkanal 11 gelangen können. Die bisher vorbeschriebenen Einzelheiten des Elektromagnetventils sind hinsichtlich ihrer Geometrie rotationssymmetrisch und zueinander koaxial ausgerichtet.

Nachfolgend wird die Funktionsweise des Elektromagnetventils erläutert. Abweichend von der in Fig. 1 dargestellten elektromagnetisch nicht erregten Schließstellung des Ventils erfolgt bei elektromagnetischer Erregung des Magnetankers 16 durch die Magnetkraft einer in der Fig. 1 nicht dargestellten Magnetspule im Luftspalt H1 zunächst ein Abheben des Ventilschließgliedes 7 vom Ventilkörper 3, womit ein Druckausgleich zwischen dem ersten Druckmittelkanal 11 und dem weiteren Druckmittelkanal 12 über den Ventildurchgang 1 stattfindet. Mit dem Erreichen eines Teilhubes H2 gelangt der Bund 10 in formschlüssige Verbindung mit der Ausnehmung des stößelförmigen Fortsatzes, so daß der am Mitnehmer 8 befestigte Ventilkörper 3 unterstützt durch die Druckfeder 9 einen Zwangshub vollzieht, der zur Druckmittelfreigabe zwischen der Bohrungsstufe 6 und dem Ventilkörper 3 führt. Das mit dem Ventilkörper 3 zusammenwirkende Ventilschließglied 7 übernimmt somit eine Vorsteuerfunktion während der elektromagnetischen Betätigung des Magnetankers 16, um den Einfluß unterschiedlicher Differenzdrücke bei geschlossenem Ventil auf die Schaltgeschwindigkeit des Ventil möglichst gering zu halten. Bei der Zwangsöffnung des Durchlasses zwischen dem Ventilkörper 3 und der Bohrungsstufe 6 wird der Effekt ausgenutzt, daß mit relativ kleiner Magnetkraft die druckausgleichende Vorsteuerfunktion des Ventilschließgliedes 7 möglich ist, womit mit kleiner werdendem Magnetluftspalt und damit überproportional ansteigender Magnetkraft (Hyperbelfunktion) eine weitgehende druckausgeglichene Ventildurchlaßstellung zwischen dem Ventilkörper 3 und der Bohrungsstufe 6 zustandekommt. Damit ist ein sicheres Öffnen des Ventils erreicht und es ist infolge der relativ gleichbleibenden und hohen Schaltgeschwindigkeit die Druckmittelzufuhr vom weiteren Druckmittelkanal 12 in den Druckmittelkanal 11 zur Pumpe durch taktweise Erregung des Ventils möglich. Dies hat bei vorliegendem Anwendungsfall zur Druckmittelversorgung einer Pumpe den Vorteil, daß auf eine Drehzahlregelung des Pumpenmotors verzichtet werden kann. Bezüglich der Einstellung des Spiels H2 ergeben sich durch die vorgeschlagene Konstruktion mehrere Varianten der Einjustierung. Dies kann durch eine entsprechende Einjustierung des Mitnehmers 8 am Ventilkörper 3 geschehen, die durch anschließende Verscherung beendet wird. Eine Alternative bietet sich durch Verschieben des stößelförmigen Fortsatzes im Magnetanker 16 an oder durch Verbiegen des relativ dünnwandigen Bundes 10 innerhalb der Aussparung am Ventilschließglied 7.

Nachfolgend wird zusammenfassend auf die wesentlichen Konstruktionsmerkmale des Elektromagnetventils verwiesen.

Es sind dies:
- der Ventildurchgang 1 ist in einem beweglich im Ventilgehäuse 2 angeordneten Ventilkörper 3 eingebracht,
- der Ventilkörper 3 liegt in seiner die Druckmittelkanäle 4,5 trennenden Grundstellung an einer Bohrungsstufe 6 des Ventilgehäuses abdichtend an,
- abgewandt von der Bohrungsstufe 6 liegt das Ventilschließglied 7 in seiner Grundstellung am Ventildurchgang 1 im Ventilkörper 3 abdichtend an,
- am Umfang des Ventilkörpers 3 ist ein im wesentlichen hülsenförmiger Mitnehmer 8 befestigt, an dem eine Druckfeder anliegt, die sich an der Bohrungsstufe 6 abstützt,
- der Ventilkörper 3, der Mitnehmer 8 sowie das Ventilschließglied 7 und die Feder 9 sind konzentrisch zur Bohrungsstufe angeordnet,
- der Mitnehmer 8 weist einen Bund 10 auf, der bei elektromagnetischer Regelung des Ventils mit dem Ventilschließglied 7 in formschlüssigem Eingriff steht,
- der erste Druckmittelkanal 11 steht mit der Saugseite einer Pumpe in Verbindung, während der weitere Druckmittelkanal mit einer Druckmittelquelle, vorzugsweise mit einem Bremsdruckgeber einer hydraulischen Kraftfahrzeugbremsanlage mit Radschlupfregelung in Verbindung steht.

### Bezugszeichenliste

- 1: Ventildurchgang
- 2: Ventilgehäuse
- 3: Ventilkörper
- 4: Druckmitteldurchgangsöffnungen
- 5: Druckmitteldurchgangsöffnungen
- 6: Bohrungsstufe
- 7: Ventilschließglied
- 8: Mitnehmer
- 9: Druckfeder
- 10: Bund
- 11: erster Druckmittelkanal
- 12: weiterer Druckmittelkanal
- 13: Hülse
- 14: Magnetkern
- 15: Feder
- 16: Magnetanker
- 17: Ventilaufnahmekörper
- 18: Ringfilterelement

## Patentansprüche

1. Elektromagnetventil, insbesondere für hydraulische Kraftfahrzeugbremsanlagen mit Radschlupfregelung, mit einem Ventilgehäuse (2), in das eine Hülse (13) eingesetzt ist, die einen Magnetkern (14) aufnimmt, mit einem Magnetanker (16), an dem ein Ventilschließglied (7) angebracht ist, das in seiner elektromagnetisch nicht erregten Grundstellung unter Wirkung einer Feder (15) einen Ventildurchgang (1) zwischen einem ersten Druckmittelkanal (11) im Ventilgehäuse und wenigstens einem weiteren Druckmittelkanal (12) im Ventilgehäuse verschließt, dadurch gekennzeichnet, daß der Ventildurchgang (1) in einem beweglich im Ventilgehäuse (2) angeordneten Ventilkörper (3) gelegen ist.

2. Elektromagnetventil nach Anspruch 1, dadurch gekennzeichnet, daß der Ventilkörper (3) in seiner die Druckmittelkanäle (11,12) trennenden Grundstellung an einer Bohrungsstufe (6) des Ventilgehäuses (2) abdichtend anliegt.

3. Elektromagnetventil nach Anspruch 2, dadurch gekennzeichnet, daß abgewandt von der Bohrungsstufe (6) das Ventilschließglied (7) in seiner Grundstellung am Ventildurchgang (1) im Ventilkörper (3) dichtend anliegt.

4. Elektromagnetventil nach Anspruch 2, dadurch gekennzeichnet, daß am Umfang des Ventilkörpers (3) ein im wesentlichen hülsenförmiger Mitnehmer (8) befestigt ist, an dem eine Druckfeder (9) anliegt, die sich an der Bohrungsstufe (6) abstützt.

5. Elektromagnetventil nach Anspruch 4, dadurch gekennzeichnet, daß der Ventilkörper (3) mit dem Mitneh-mer (8), sowie das Ventilschließglied (7) und die Feder (9) konzentrisch zur Bohrungsstufe (6) angeordnet sind.

6. Elektromagnetventil nach Anspruch 4, dadurch gekennzeichnet, daß der Mitnehmer (8) einen Bund (10) aufweist, der bei elektromagnetischer Erregung des Ventils mit dem Ventilschließglied (7) im formschlüssigen Eingriff steht.

7. Elektromagnetventil nach Anspruch 1, dadurch gekennzeichnet, daß der erste Druckmittelkanal (11) mit der Saugseite einer Pumpe in Verbindung steht sowie der weitere Druckmittelkanal (12) mit einer Druckmittelquelle verbunden ist.

## Claims

1. Electromagnetic valve, in particular for hydraulic automotive vehicle brake systems with wheel slip control, including a valve housing (2) in which a sleeve (13) housing a magnetic core (14) is inserted, a magnetic armature (16) on which a valve closure member (7) is mounted which, in its electromagnetically non-energized initial position, by the action of a spring (15), closes a valve passage (1) between a first pressure fluid channel (11) in the valve housing and at least one further pressure fluid channel (12) in the valve housing,
**characterized** in that the valve passage (1) is positioned in a valve member (3) that is movably arranged in the valve housing (2).

2. Electromagnetic valve as claimed in claim 1,
**characterized** in that the valve member (3) abuts and seals a bore step (6) of the valve housing (2) in its initial position where the pressure fluid channels (11, 12) are separated.

3. Electromagnetic valve as claimed in claim 2,
**characterized** in that, remote from the bore step (6), the valve closure member (7) in its initial position abuts and seals the valve passage (1) in the valve member (3).

4. Electromagnetic valve as claimed in claim 2,
**characterized** in that attached to the periphery of the valve member (3) is a generally sleeve-shaped entraining element (8) against which a compression spring (9) bears which is supported on the bore step (6).

5. Electromagnetic valve as claimed in claim 4,
**characterized** in that the valve member (3), along with the entraining element (8), as well as the valve closure member (7) and the spring (9) are arranged concentrically relative to the bore step (6).

6. Electromagnetic valve as claimed in claim 4,
**characterized** in that the entraining element (8) includes a collar (10) which is in positive engagement with the valve closure member (7) when the valve is electromagnetically energized.

7. Electromagnetic valve as claimed in claim 1,
**characterized** in that the first pressure fluid channel (11) is connected to the suction side of a pump, and the second pressure fluid channel (12) is connected to a pressure fluid source.

## Revendications

1. Soupape électromagnétique, notamment pour systèmes hydrauliques de freinage de véhicules à moteur à régulation du glissement des roues, comprenant un boîtier de soupape (2) dans lequel est inséré un manchon (13) qui reçoit un noyau magnétique (14), avec un induit d'électroaimant (16) sur lequel est monté un obturateur de soupape (7) qui, dans sa position de base dépourvue d'excitation électromagnétique, obture sous l'action d'un ressort (15) un passage de soupape (1) entre un premier canal (11) de fluide hydraulique dans le boîtier de soupape et au moins un autre canal (12) de fluide hydraulique dans le boîtier de soupape, **caractérisée** en ce que le passage de soupape (1) se trouve dans un corps de soupape (3) disposé à déplacement dans le boîtier de soupape (2).

2. Soupape électromagnétique selon la revendication 1, **caractérisée** en ce que le corps de soupape (3) s'applique en étanchéité, dans sa position de base isolant les canaux (11, 12) de fluide hydraulique, contre un gradin de perçage (6) du boîtier de soupape (2).

3. Soupape électromagnétique selon la revendication 2, **caractérisée** en ce que, dans sa position de base, l'obturateur de soupape (7) s'applique en étanchéité contre le passage de soupape (1) dans le corps de soupape (3) à l'opposé du gradin de perçage (6).

4. Soupape électromagnétique selon la revendication 2, **caractérisée** en ce qu'un entraîneur (8) essentiellement en forme de douille est fixé sur la périphérie du corps de soupape (3), entraîneur contre lequel s'applique un ressort de pression (9) qui s'appuie contre le gradin de perçage (6).

5. Soupape électromagnétique selon la revendication 4, **caractérisée** en ce que le corps de soupape (3) avec l'entraîneur (8), ainsi que l'obturateur de soupape (7) et le ressort (9), sont disposés concentriquement au gradin de perçage (6)

6. Soupape électromagnétique selon la revendication 4, **caractérisée** en ce que l'entraîneur (8) présente un collet (10) qui, lors de l'excitation électromagnétique de la soupape, se trouve en engagement positif avec l'obturateur de soupape (7).

7. Soupape électromagnétique selon la revendication 1, **caractérisée** en ce que le premier canal (11) de fluide hydraulique est relié au côté d'aspiration d'une pompe, et l'autre canal (12) de fluide hydraulique est relié à une source de fluide hydraulique.
